# EUROPEAN PATENT SPECIFICATION

(11) **EP 4 563 312 B1**
(45) Date of publication and mention of the grant of the patent: **17.06.2026**
(21) Application number: 24215332.8
(22) Date of filing: 26.11.2024
(51) Int. Cl.: B29B 7/28, B29B 7/82, B29B 7/90, B29B 9/14, B29B 7/48

(54) **PROCESS FOR PRODUCING COMPOSITES FROM CELLULOSE FIBRES**
VERFAHREN ZUR HERSTELLUNG VON VERBUNDWERKSTOFFEN AUS ZELLULOSEFASERN
PROCÉDÉ DE FABRICATION DE COMPOSITES À PARTIR DE FIBRES DE CELLULOSE

(30) Priority: 29.11.2023 PT 2023119080
(43) Date of publication of application: 04.06.2025
(73) Proprietor: RAIZ - Instituto De Investigação Da Floresta E Papel, 3800-783 Eixo, Aveiro (PT)
(72) Inventor: de Pascoal Neto, Carlos, 3800-783 Eixo (PT); Miguel Ricardo Gaspar, Alexandre, 3800-783 Eixo (PT); Assumpçao Bicalho, Luciana, 3800-783 Eixo (PT); Afonso Valente, Bruno Filipe, 3800-783 Eixo (PT)

(56) References cited:
- EP-A1- 2 511 323
- WO-A1-2015/193533
- JP-A- 2009 001 597
- US-A- 5 738 935
- US-A1- 2009 181 207
- US-A1- 2023 078 455

## Description

### FIELD OF INVENTION

The present invention relates to a process for producing composites from cellulose fibers.

### BACKGROUNF OD THE INVENTION

Natural fibers, that is, fibers obtained from (or produced by) animals and plants, are increasingly used in composite production to replace synthetic fibers and/or to reduce the use of petrochemical-based matrices in such composites. Their high abundance, low production cost, renewability, and compostability are appealing characteristics that contribute to the growing use of natural fibers in composite production. Among these natural fibers, cellulosic fibers derived from plants, trees, or bacteria have gained prominence in this field.

Different processes have been proposed to produce composites from natural fibers.

EP3377562B1 discloses a method of producing a composite product from natural fibers and thermoplastic polymers. The invention comprises the use of wood fibers obtained through various processes, including refiner pulp (RMP), thermomechanical pulp (TMP), and chemi-thermomechanical pulp (CTMP). In this method, the fibers are introduced from the blowline or the housing of a refiner into a flash tube dryer, separated from humid air in a cyclone, compacted in a compactor to increase the bulk density and finally introduced into a compounder and mixed with at least one thermoplastic polymer to form granules, ready for further processing in plastic industry equipment. The described method relies on the compaction step within a compactor, achieving a specific bulk density ranging from 100 to 350 kg/m³. This compacting step facilitates fiber feeding through all stages, ensuring a continuous process. The fiber pulps used in EP3377562B1 do not undergo any mechanical treatment to reduce cellulosic fiber dimensions. In fact, besides the compaction step to achieve predefined densities, EP3377562B1 does not report any specific configuration or integration of process steps aimed at additional advantages such as reducing raw material waste, improving energy efficiency, or enhancing subsequent material processing.

EP2890538B1 describes a method of producing a composite product from natural fibers and thermoplastic polymers. The fibrous materials include cellulosic pulps obtained from mechanical and/or chemical processing of wood. According to the described process, at the stage where the fibers contact the thermoplastic polymer matrix, the fibrous material must have a bulk density of 30C kg/m³, ensuring a compression ratio of less than 4. Additionally, the lignin content of the fibrous material should be less than 1 wt.%. Using fibrous materials with these properties prevents fiber adhesion, thereby enhancing their contact and dispersion within the polymer matrix. Apart from these specific properties of the fibrous material, EP2890538B1 does not detail specific configurations of the various process steps for producing composites with regards to, for example, the sequence of different steps and equipment speed profiles and temperatures in such a way that simultaneously reduces raw material waste, improves energy efficiency, and optimizes subsequent composite material processing.

EP2814657B1 describes a method for producing a composite using polymeric matrices and cellulosic fibers obtained from wood pulping processes, particularly chemical pulping. The key feature of this patent lies in the design of the mixing device, such as a single-screw extruder, where the exit area of the mixing device is reduced by 40 to 60% when compared to its cross-sectional area. This reduction in the exit area increases the temperature within the device, facilitating the dispersion of fibers within the polymeric matrix.

EP3386703B1 describes a method for producing a precursor material for the manufacture of a composite material granulate. This precursor material is also made from polymers and cellulosic fibers, using a process that promotes a better fiber dispersion in the final extruded composite material. This is accomplished through a final step of the process, occurring after the fibers have been mixed with the polymer, the temperature has been raised above the polymer's melting point, and the rotational speed of the mixing equipment has been adjusted, and where the precursor material is ground on a comminuting device while its temperature decreases. This process breaks larger agglomerates and coalesces smaller ones, resulting in a narrower particle size distribution in the obtained material. The fibers used in EP3386703B1 do not undergo any mechanical treatment to reduce their dimensions before mixing with the polymer.

EP3353234B1 refers to a method for producing a foamed composite material from cellulosic fibers and a copolymer composition. This copolymer composition is crucial for forming the invention's copolymer. These copolymers contain anhydride groups that, under heat and pressure, react with the hydroxyl groups of the cellulosic fibers to produce a blowing agent as a byproduct, enabling the formation of the foamed composite material, which can subsequently be molded or extruded.

The growth of the natural fiber composite market and its use depend on the existence of production methods that are efficient, cost-effective, and result in products with competitive properties to replace their fossil-based counterparts. Although various processes for producing these composites exist, as described above, they focus almost exclusively on achieving good fiber dispersion within the polymer matrix. Further related prior art methods are described in US2009/181207A1, EP2511323A1 and US5738935A.

US2009/181207A1 describes a process for producing composites from cellulosic fibers comprising the steps of:
a) Selecting of cellulosic fibers;
b) Mechanically treating the cellulosic fibers selected in step
a) in milling equipment until their average length is reduced to values between 60-800 µm, preferably between 200-500 µm;
e) Increasing the tip velocity of the rotating means in the mixing device up to 50.0 m/s and maintaining this rotation under vacuum for a sufficient period of time until the temperature rises, through heating means and/or friction between components in the mixing device to above the VICAT softening point and/ or the melting point of the thermoplastic polymers, ensuring adhesion and/or wetting of the thermoplastic polymers and additives onto the fibers, monitoring the process by the increase in the intensity of the electric current needed to maintain the velocity of the rotating means;
f) Stopping the heating means and/or gradually reducing the rotational speed of the mixing means until it reaches 30%-40% of the maximum speed used, with this reduction monitored either by predetermined intensity of the electric current or by predetermined temperature values;
h) Transferring the material resulting from steps (a) to (g), with bulk densities between 0.15-2.0 g/cm3 , to a cylindrical cooling drum equipped with a water-based cooling system at temperatures of 25°C or lower, and rotating elements connected to a rotating shaft that provide axial and radial movements and compression against the drum walls;
i) Maintaining the rotation of the rotating means in step (h) until the temperature of the resulting material reaches 80°C or lower;
j) Discharging the material from step (i) onto a vibrating sieve with a mesh diameter between 3-6 mm;
k) Discharging the material rejected by the sieve in step (j) into a grinder equipped with a 3-6 mm mesh for grinding;l) Feeding the materials obtained in steps (j) and (k) into an extruder via either the main feeder or a side feeder to produce a final product containing 10-60% cellulosic fibers by mass relative to the total product mass.

Therefore, there is still a need for an alternative production process for this type of composites that provides an integrated approach and can achieves a simultaneous plurality of improvements with regard to, for example, the reduction of waste in raw materials, better energy efficiency and an improvement in the subsequent processing of the composite material obtained.

### SUMMARY OF THE INVENTION

The present invention relates to a process for producing composites from cellulosic fibers comprising the steps of:
a) Selecting the cellulosic fibers;
b) Mechanical treatment of the cellulosic fibers selected in step a) in milling equipment until their average length is reduced to values between 60-800 µm, preferably between 200-500 µm;
c) Adding the cellulosic fibers resulting from step b) to a mixing device equipped with rotational means connected to a rotating shaft and with heating means, and activation of the heating means and/or the rotation means to tip velocity of the rotating means between 5.0-22.0 m/s and under vacuum at relative gauge pressures between -100 mbar and - 900 mbar, and maintaining those operating conditions until the temperature inside the mixing device reaches values between 40-120 °C;
d) Adding to the mixing device, at a tip velocity of the rotating means betweer 5.0-22.0 m/s, at least one thermoplastic polymer in a way to achieve a cellulosic fiber content between 20-60 wt.% relative to the total blend mass, along with the addition of additives to achieve a proportion of 0.25-30 wt.% relative to the total blend mass;
e) Increasing the velocity of the tip of the rotating means in the mixing device up to 50.0 m/s and maintaining this rotation under vacuum for a sufficient period of time until the temperature rises through heating means and/or friction between components in the mixing device to above the VICAT softening point and/or the melting point of the thermoplastic polymers, ensuring adhesion and/or wetting of the thermoplastic polymers and additives onto the fibers, monitoring the process by the increase in intensity of the electric current needed to maintain the velocity of the rotating means;
f) Stopping the heating means and/or gradually reducing the rotational speed of the mixing means until it reaches 30%-40% of the maximum speed used, being this reduction monitored either by predetermined intensity of the electric current or by predetermined temperature values;
g) Maintaining the rotation achieved in step (f) for a period of 30-120 seconds;
h) Transferring the material resulting from steps (a) to (g), with bulk densities between 0.15-2.0 g/cm³, to a cylindrical cooling drum equipped with a water-based cooling system at temperatures of 25°C or lower, and rotating means connected to a rotating shaft that provide axial and radial movements and compression against the drum walls;
i) Maintaining the rotation of the rotating means in step (h) until the temperature of the resulting material reaches 80°C or lower;
j) Discharging the material from step (i) onto a vibrating sieve with a mesh diameter between 3-6 mm;
k) Discharging the material rejected by the sieve in step (j) into a grinder equipped with a 3-6 mm mesh for grinding;
l) Feeding the materials obtained in steps (j) and (k) into an extruder via either the main feeder or a side feeder to produce a final product containing 10-60 wt.% cellulosic fibers relative to the total product mass.

In a preferred embodiment of the invention, on step a), cellulosic fibers are selected from fibers obtained from washers present in the fiber line of a pulp production unit with moisture contents between 90-98% and subsequently dried until obtaining a moisture content between 4-15% and/or selected from residual cellulosic fibers from a cellulosic production or processing unit.

In a preferred embodiment of the invention, drying of cellulosic fibers is carried out in equipment selected from the group consisting of flash dryers, ring dryers, rotary drums dryers and drying presses used in the industrial production of cellulosic pulps.

In a preferred embodiment of the invention, in step a), cellulosic fibers are selected from bleached eucalyptus kraft pulp.

In a preferred embodiment of the invention, the fibers to be mechanically treated in step b) are found in the form of powder, flakes, sheets or webs, granules, yarns, fabrics, bales, or pulp.

In a preferred embodiment of the invention, the milling equipment of step b) is selected from the group consisting of knife mills, hammer mills, ball mills and mills equipped with mesh screens of predefined dimensions.

In a preferred embodiment of the invention, the heating means of step c) and e) are heating jackets.

In a preferred embodiment of the invention, the heating jacket is heated by an electrical resistance or by a thermal fluid and/or through heat exchange with secondary heat sources such as exhaust gases from biomass thermal boilers, natural gas cogeneration and black liquor recovery boilers.

In a preferred embodiment of the invention, the rotating means in the mixing device are propellers having a plurality of blades sized to induce 3 stages, namely a bottom scraper propeller to create a vortex and lift the material, one or more intermediate propellers to induce fluidity and agitation and an additional propeller to force the circulation of material from the periphery of the equipment to the center.

In a preferred embodiment of the invention, in step l), and in addition to the material obtained in steps j) and k), the extruder is additionally fed with a masterbatch comprising at least one thermoplastic polymer and at least one additive.

In a preferred embodiment of the invention, the thermoplastic polymers are selected from the group consisting of polyolefins, polyamides, polyesters, polyurethanes, polyvinyl esters, polystyrenes, thermoplastic starches, thermoplastic elastomers, acrylics, cellulose derivatives and copolymers of acrylates, acrylonitrile, ethylene and butadiene, virgin and/or recycled, and mixtures thereof.

In a preferred embodiment of the invention, the additives are selected from the group consisting of plasticizers, compatibilizers, impact modifiers, chain extenders, flame retardants, antimicrobial agents, UV stabilizers, lubricants, mineral fillers, dyes, pigments and mixtures thereof.

In a preferred embodiment of the invention, the final product obtained in step l) is in the form of granules.

### BRIEF DESCRIPTION OF THE FIGURES

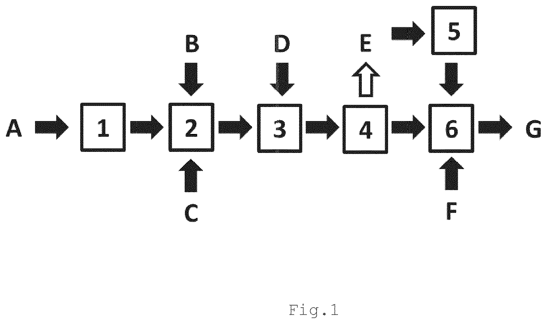

Figure 1. Flow diagram of a preferred form of the invention. A - Cellulosic fibers; B - Thermoplastic polymer(s); C - Additive(s); D - Cold Water; E- Rejected precursor material; F - Masterbatch; G - Final composite material. 1 - Fiber milling equipment; 2 - Mixing device; 3 - Cooling drum; 4 - Vibrating sieve; 5 - Grinder; 6- Extruder.

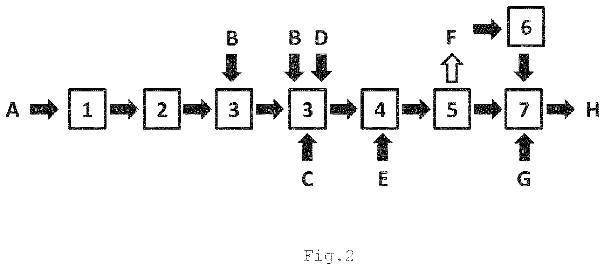

Figure 2. Flow diagram of another preferred form of the invention where, in addition to the procedure illustrated in Figure 1, it also includes the process of drying cellulosic fibers and the use of heating means. A - Cellulosic fibers; B - Vapor; C - Thermoplastic polymer(s); D - Additive(s); E - Cold Water; F - Rejected precursor material; G - Masterbatch; H - Final composite material. 1 - Fiber dryers; 2 - Fiber milling equipment; 3 - Mixing device; 4 - Cooling drum; 5 - Vibrating sieve; 6 - Grinder; 7 - Extruder.

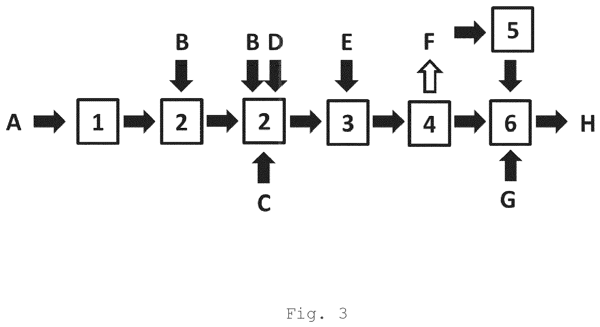

Figure 3. Flow diagram of another preferred form of the invention wherein, in addition to the procedure illustrated in Figure 1, it also includes the use of heating means. A - Cellulosic fibers; B - Vapor; C - thermoplastic polymer(s); D - Additive(s); E - Cold Water; F - Rejected precursor material; G - Masterbatch; H - Final composite material. 1 - Fiber milling equipment; 2 - Mixing device; 3 - Cooling drum; 4 - Vibrating sieve; 5 - Grinder; 6 - Extruder.

### DETAILED DESCRIPTION OF THE INVENTION

The present invention provides a process for producing composites from cellulosic fibers, as described in this patent application and Claim 1, whose configuration specification and integrated nature of the different steps characterizing this process, such as the sequence of the steps and the speed and temperature profiles of the associated equipment, enable, simultaneously, a reduction in raw material waste, an improvement on energy efficiency, and enhanced subsequent processing and quality of the resulting composite material.

Processing of the fibers according to the different steps characterizing this process results in increased fibers density, which maximizes the fiber incorporation capacity in the extrusion process without compromising the productivity of the equipment. It also achieves better fiber dispersion within the polymeric matrix, reduced moisture uptake, improved compatibility, and increased contact points between additives, thermoplastic polymers, and fibers.

The use of secondary heating sources, in accordance with the different steps characterizing this process, allows for improved energy efficiency.

In the context of the present invention, cellulosic fibers refer to fibers derived from wood, plants, or bacteria, such as bacterial cellulose.

Additionally, and in the context of the present invention, cellulosic fibers originate from mechanically and/or chemically treated pulp.

In the context of the present invention, and in accordance with the definition provided by the Confederation of European Paper Industries (CEPI), (Pulp and Paper Industry - Definitions and Concepts, CEPI - January 2021), mechanical pulp refers to cellulosic pulp produced through mechanical processes that separate and defibrate wood to form pulp. For the production of mechanical pulp, chemical pre-treatments may also be included. Mechanical pulps are thus designated based on their production method and weather pre-treatments are included or not, as mechanical pulp, thermomechanical pulp (TMP), chemi-mechanical pulp (CMP), and chemi-thermomechanical pulp (CTMP). Mechanical pulp refers to pulp obtained through mechanical wood processing, thermomechanical pulp refers to pulp obtained via mechanical means with a pre-treatment at elevated temperatures and pressures, and chemi-mechanical and chemi-thermomechanical pulps refer to pulps obtained through mechanical processes preceded by chemical pre-treatments.

In the context of the present invention, chemical pulp refers to cellulosic pulp produced exclusively through any chemical process that dissolves lignin in the wood to release the fibers from the matrix.

In the context of the present invention, Kraft refers to the Kraft cooking process, or sulfate cooking process. This chemical process involves cooking wood in a cooking liquor typically composed of sodium hydroxide and sodium sulfide, at temperatures ranging from 140 to 180 °C.

In the context of the present invention, bleached pulp refers to pulp produced through wood cooking processes and further subjected to a bleaching step. The bleaching step aims to continue the delignification of the wood, initiated during cooking, through the action of oxidizing agents such as oxygen, chlorine dioxide, and hydrogen peroxide. Conversely, unbleached pulp does not undergo any bleaching step after cooking.

In the context of the present invention, bleached eucalyptus Kraft pulp refers to cellulosic pulp obtained through the Kraft cooking process of eucalyptus wood. The pulp resulting from the cooking process is further bleached.

In the context of the present invention, residual fibers refer to fibers that are by-products of the production and/or transformation of cellulosic materials. In the present invention, residual fibers may include, but are not limited to, sawdust from wood cutting, woodchips, and dust from the production of printing and writing papers, hygiene products, and packaging papers.

In the context of the present invention, a thermoplastic polymer refers to polymeric compounds that soften and melt upon heating, flowing as a viscous liquid, and solidify again upon cooling. This is a physical, reversible transformation.

In the context of the present invention, virgin and/or recycled thermoplastic polymers and their blends can be selected, such as: polyolefins, including but not limited to, polyethylene (PE), polypropylene (PP), polybutylene (PB) ; polystyrenes, including but not limited to, polystyrene (PS); polyamides, including but not limited to: polycaprolactam (nylon 6), polyundecanamide (nylon 11), poly(hexamethylene adipamide) (nylon 6,6), polylaurolactam (nylon 12); polyesters, including but not limited to, polyethylene terephthalate (PET), polylactic acid (PLA), polyhydroxyalkanoates (PHA), polyhydroxybutyrate (PHB), polycaprolactone (PCL), polybutylene succinate (PBS), poly(butylene adipate-co-terephthalate) (PBAT); polyurethanes, including but not limited to, polyurethane (PU); polyvinyl esters, including but not limited to: polyvinyl acetate (PVA), polyvinyl alcohol (PVOH); thermoplastic starches (TPS); thermoplastic elastomers, including but not limited to, polystyrene thermoplastic elastomers, polyurethane thermoplastic elastomers, polyvinyl chloride thermoplastic elastomers, polyether-polyamide thermoplastic elastomers, vulcanized thermoplastic elastomers; acrylics, including but not limited to: polymethyl methacrylate (PMMA), polyacrylonitrile (PAN); cellulose derivatives, including but not limited to: cellulose acetate (CA), cellulose acetate butyrate (CAB), cellulose acetate propionate (CAP), ethyl cellulose (EC) ; copolymers of styrene, acrylates, acrylonitrile, ethylene, and butadiene, including but not limited to, styrenebutadiene copolymer (SBR), ethylene-vinyl acetate copolymer (EVA), acrylonitrile-butadiene-styrene copolymer (ABS), styrene-acrylonitrile copolymer (SAN).

In the context of the present invention, the thermoplastic polymer can be used in the form of pellets, granules, flakes, or powder. It may additionally comprise additives or any other additional component useful in the process of the present invention.

In the context of the present invention, a thermal fluid refers to a substance used in industrial activities involving heat transfer, capable of reaching extreme temperatures (high or low) without undergoing a change in its physical state.

In the context of the present invention, exhaust gases from thermal boilers refer to gases originating from the combustion chambers of thermal boilers, which can serve as a secondary heat source.

In the context of the present invention, natural gas cogeneration consists of the simultaneous production of two or more forms of energy from a single fuel, in this case, natural gas. The energy produced can serve as a secondary heat source.

In the context of the present invention, black liquor refers to the by-product resulting from the chemical cooking of wood for pulp and paper production. It is burned in industrial pulp production units to generate energy, which can be used as a secondary heat source.

In the context of the present invention, a masterbatch refers to a concentrated mixture of additives and/or polymers used to impart additional properties to the final product. The word masterbatch is commonly used in the relevant technical field.

In the context of the present invention, plasticizers refer to chemical substances, generally of low molecular weight, used to reduce the rigidity of a material, increase its flexibility, malleability, deformability, and mobility.

In the present invention, plasticizers may include, but are not limited to, epoxidized or maleinized vegetable oils, citrate esters, triacetin, and polyols.

In the context of the present invention, compatibilizers refer to chemical substances or chemically modified polymers used to improve interfacial adhesion and stabilize the interface between polymeric matrices and reinforcements. In the present invention, compatibilizers may include, but are not limited to, polymers, copolymers, and/or oligomers grafted with maleic anhydride, epoxidized or maleinized vegetable oils, and surfactants.

In the context of the present invention, impact modifiers refer to chemical substances used to enhance the impact resistance of a final product by absorbing and dissipating energy upon impact. In the present invention, impact modifiers may include, but are not limited to, thermoplastic elastomers, lactic acid esters, core-shell particles (i.e., micro or nanoparticles with solid, liquid, or gaseous cores encapsulated in protective solid shells), and polymers, copolymers, and their blends, such as, but not limited to, high-impact polystyrene (HIPS), acrylonitrile-butadiene-styrene (ABS), polybutylene succinate (PBS), styrene/butadiene and styrene/ethylene copolymers, and linear, branched, and cyclic olefin copolymers.

In the context of the present invention, chain extenders refer to molecules with reactive groups that react with the ends of polymer chains to increase their molecular weight. In the present invention, chain extenders may include, but are not limited to, copolymers of styrene and glycidyl methacrylate, high molecular weight acrylics, and styrene-acrylic-epoxy oligomers/polymers.

In the context of the present invention, fire retardants refer to chemical substances that reduce the risk of ignition and delay the spread of flames when exposed to a heat source or fire. In the present invention, flame retardants may include, but are not limited to, phosphorus compounds such as phosphoric acid, tributyl phosphate, triallyl phosphate, ammonium polyphosphate, diammonium phosphate, and melamine cyanurate, as well as silica, silanes, silicates, metal oxides, and halogenated compounds based on chlorine and bromine.

In the context of the present invention, antimicrobial agents refer to chemical substances used to confer resistance to microorganisms. In the present invention, antimicrobial agents may include, but are not limited to, calcium, copper, zinc, sodium, potassium, or barium carbonates; silicates; sulfates; halides; quaternary ammonium compounds; phenolic compounds; zinc pyrithione; isothiazolinone; thiabendazole; zinc oxide nanoparticles; silver nanoparticles; and copper nanoparticles.

In the context of the present invention, UV stabilizers refer to chemical substances that help minimize the effects of UV radiation on materials, preventing discoloration and surface breakdown of the material. In the present invention, UV stabilizers may include, but are not limited to, carbon black, titanium dioxide, hydroxybenzophenones, 2-(2-hydroxyphenyl)-2H-benzotriazoles, benzotriazoles, acrylates, malonates, and hindered amine light stabilizers (HALS).

In the context of the present invention, lubricants refer to chemical substances introduced to reduce friction and/or wear rate. They can be internal lubricants, which act by reducing friction between molecules and improving flow, or external lubricants, which act by reducing macroscopic friction between the polymer and the metal of the equipment in contact. Lubricants improve the material's fluidity during processing and reduce equipment wear. In the present invention, lubricants may include, but are not limited to, mineral oils, waxes, polyols, modified fatty acid esters, and silicone oils.

In the context of the present invention, mineral fillers refer to inorganic substances introduced to reduce the amount of polymer matrix and/or to confer improved properties to the materials. In the present invention, mineral fillers may include, but are not limited to, calcium carbonate, marble powder, talc, quartz, clay, and asbestos.

In the context of the present invention, dyes and pigments refer to natural or synthetic substances used to impart color to materials. In the present invention, dyes and pigments may include, but are not limited to, inorganic pigments such as titanium dioxide, zinc oxide, zinc chromate, cadmium sulfides, chromium oxide, sodium aluminum silicate; and organic pigments such as carbon black, phthalocyanines, azo and diazo compounds, quinacridone, perylene, isoindoline, anthraquinones, and thioindigo.

In the context of the present invention, flash dryers and ring dryers, widely known by these terms in the technical field of the present invention, refer to industrial equipment that brings a substance into contact with streams of dry air to promote its drying.

In the context of the present invention, washers such as drum washers and presses refer to industrial equipment that facilitates the contact of a substance with water to remove impurities.

In the context of the present invention, the VICAT softening temperature describes the temperature at which a flat-pointed needle penetrates the sample surface to a predefined depth when subjected to a standardized load. It is determined according to ISO 306 or ASTM D15-5 - Vicat Softening Temperature.

In the context of the present invention, melting temperature is the average value of the temperature range in which, during heating, the crystalline regions of the polymer transition to a viscous flow state.

In the context of the present invention, the moisture content of fibers can be determined using a moisture analyzer (RADWAG MA 50/1.X2.IC.A) by drying the fibers at 105 °C until the mass variation is less than 1 mg/120s. Moisture values can be calculated using the formula: %M = ((M1-M2)/M1)*100, where %M represents the moisture content of the sample, in percentage, and M1 and M2 correspond to the initial and final masses of the sample before and after drying, respectively.

In the context of the present invention, the bulk densities of cellulosic fibers and the products resulting from steps a) to h) can be determined by the ratio of the mass of the sample required to occupy a known and preestablished volume (75,000 cm³), using the formula ρ = m/V, where ρ is the bulk density (g/cm³), m is the mass (g), and V is the volume (cm³).

In the context of the present invention, the densities of thermoplastic polymers and the final biocomposite can be determined according to ISO 1183 - Method B.

In the context of the present invention, the average fiber lengths can be determined by the following steps: preparation of 100-200 mL suspensions containing 0.1 g of fibers in dry content and introducing these suspensions into an L&W Fiber Tester Plus - code 912 plus equipment, which determines the average fiber lengths through automated optical analysis.

In the context of the present invention, the speed of the tip of the rotating means refers to the ratio between the distance traveled by the extremity of the mixing elements and the time it takes to cover that distance.

### Examples

Examples of embodiments of the present invention are provided below. It should be noted that the present invention is not limited to the disclosed examples, as other variations are possible and may be implemented by a person skilled in the art without departing from the scope of protection of the present invention.

### Example 1

As shown in Figure 1, 100 kg (dry weight) of bleached eucalyptus kraft pulp (A) were introduced into a milling device (1) (CelluloseMill^{®} - Mill-lab 5) equipped with high-precision blades. The pulp was milled until the fibers passed through a 200 µm mesh by the action of a suction box.

Subsequently, 10 kg of the fibers obtained in the previous step were introduced into a mixing device (2) (Promixon hot/cold mixing system type XWOOD-MC/600/1800/W), and the propellers were rotated until their tips reached a velocity of 20 m/s. This speed was maintained under vacuum (gauge pressure of -600 mbar) until the temperature raised to 120 °C due to the friction between fibers. Through mechanical and thermal action, the fiber agglomerates were disintegrated, and the fibers' moisture content decreased by 70% compared to the initial value.

14.5 kg of commercial grade of polypropylene (B) (Braskem PP PRB 0131) and 0.5 kg of an additive (C) (MA-g-PP) were added while maintaining the tip velocity of the propellers at 20 m/s, resulting in a fiber content of 40 wt.%. The propeller tip velocity was then increased to 38 m/s under vacuum (gauge pressure of -600 mbar) until the intensity of the electric current of the motor driving the propellers reached 50A. Next, the tip velocity was gradually reduced to 15 m/s and maintained for 60 seconds. Once the mixture of the softened/melted thermoplastic polymer with the mechanically treated fibers and additives was completed, the material, with a bulk density six times higher than the initial fiber density, was transferred into a cylindrical cooling drum (3) equipped with a water-cooling system at 15 °C (D) and kept there until the mixture temperature reached 50 °C. The resulting material was then discharged into a vibrating sieve with a 5 mm mesh (4). The rejected material (E) was ground in a grinder equipped with a sieve of the same size (5).

To obtain the final composite, the precursor material described above was processed using a Krauss Maffei ZE42 (6) twin-screw, co-rotating, intermeshing extruder, fed via conventional feeders. Along with the precursor material, a masterbatch (F) of polypropylene (PP) and a lubricant (modified fatty acid ester) were added. Remarkably, the precursor material maintained the feeder operating at full capacity, enabling successful large-scale industrial extrusion.

The process required low specific energy (0.12 to 0.18 kWh/kg), demonstrating significant energy savings and excellent material processability. At the end of the extrusion process, granules containing approximately 30 wt.% cellulose fiber (G) were obtained.

### Example 2

As shown in Figure 2, 1000 kg of unbleached eucalyptus kraft pulp with 90% moisture content from a pulp production unit (A) were dried using pulp drying equipment (1). The cellulose-based material, in sheet form with a moisture content of 10%, was fed into a milling device (2) (CelluloseMill^{®} - Mill-lab 5) equipped with high-precision blades. The pulp was milled until the fibers passed through a 500 µm mesh by the action of a suction box.

Subsequently, 10 kg of the fibers obtained in the previous step were introduced into a mixing device (3) (Promixon hot/cold mixing system type XWOOD-MC/600/1800/W) equipped with a heating jacket containing thermal fluid heated by steam generated from black liquor recovery boilers from a pulp production unit (B). The propellers were rotated until their tips reached a velocity of 16.5 m/s. This rotation was maintained under vacuum (gauge pressure of -600 mbar) until the temperature reached 40 °C.

9 kg of commercial polylactic acid (C) (Luminy^{®} PLA LX175), 1 kg of a lubricant (D) (fatty acid ester), and 1 kg of plasticizer (D) (epoxidized soybean oil) were added while maintaining the tip velocity of the propellers at 16.5 m/s. The propeller tip velocity was then increased to 50.0 m/s under vacuum (gauge pressure of -600 mbar) until the intensity of the electric current of the motor driving the propellers reached 45A. The tip velocity was gradually reduced to 15 m/s and maintained for 60 seconds. Once the mixture of the softened/melted thermoplastic polymer with the mechanically treated fibers and additives was completed, the material, with a bulk density six times higher than the initial fiber density, was transferred into a cylindrical cooling drum (4) equipped with a water-cooling system at 15 °C (E) and kept there until the mixture temperature reached 50 °C. The resulting material was then discharged into a vibrating sieve with a 5 mm mesh (5). The rejected material (F) was ground in a grinder equipped with a sieve of the same size (6).

To obtain the final composite, the precursor material described above was processed using a Krauss Maffei ZE42 (7) twin-screw, co-rotating, intermeshing extruder fed via conventional feeders. Along with the precursor material, a masterbatch (G) was added. Remarkably, the precursor material maintained the feeder operating at full capacity, without any decline in its feeding capacity. This enabled a successful large-scale industrial extrusion.

The process required low specific energy, ranging from 0.12 to 0.18 kWh/kg. Significant energy savings were achieved during the process, combined with excellent material processability. At the end of the extrusion process, granules containing approximately 40 wt.% cellulose fiber (H) were obtained.

### Example 3

In this example, shown in Figure 2, 1000 kg of bleached eucalyptus kraft pulp, with 95% moisture content, originated from a pulp production unit (A) were dried using pulp drying equipment (1). The dried material, in sheet form, was fed into a milling device (2) (CelluloseMill^{®} - Mill-lab 5) equipped with high-precision blades. The pulp was milled until the fibers passed through an 800 µm mesh by the action of a suction box.

Subsequently, 10 kg of the fibers obtained in the previous step were introduced into a mixing device (3) (Promixon hot/cold mixing system type XWOOD-MC/600/1800/W) equipped with a heating jacket containing thermal fluid heated by steam originated from the combustion of black liquor in a pulp production unit (B). The propellers were rotated until their tips reached a velocity of 5.0 m/s. This rotation was maintained under vacuum (gauge pressure of -100 mbar) until the fiber moisture content was reduced by 65% compared to the initial value due to heat generated by both fiber friction and the heating jacket.

10 kg of commercial polylactic acid (C) (Luminy^{®} PLA LX175), 3 kg of polybutylene succinate (MCC Biochem FZ79AC) (C), 1 kg of lubricant (D) (fatty acid ester), and 1 kg of plasticizer (D) (epoxidized soybean oil) were added while maintaining the tip velocity of the propellers at 5.0 m/s. The propellers tip velocity was then increased to 38 m/s under vacuum (gauge pressure of -100 mbar) until the intensity of the electric current of the motor driving the propellers reached 35A. The tip velocity was gradually reduced to 15 m/s and maintained for 30 seconds. Once the mixing of the softened/melted thermoplastic polymers with the mechanically treated fibers and additives was completed, the material, with a bulk density six times higher than the initial fiber density, was transferred into a cylindrical cooling drum (4) equipped with a water-cooling system at 25 °C (E) and kept there until the mixture temperature reached 80 °C. The resulting material was then discharged into a vibrating sieve with a 3 mm mesh (5). The rejected material (F) was ground in a knife mill equipped with a sieve of the same size (6).

To obtain the final composite, the precursor material described above was processed using a Krauss Maffei ZE42 (7) twin-screw, co-rotating, intermeshing extruder fed via conventional feeders. Along with the precursor material, a masterbatch (G) was added. Remarkably, the precursor material maintained the feeder operating at full capacity, without any decline in its feeding capacity. This enabled a successful large-scale industrial extrusion, resulting in the final composite material (H).

### Example 4

As shown in Figure 3, 100 kg (dry weight) of residual fiber from the paper industry (A), originating from a cellulose-based materials processing unit, were fed in powder form into a milling device (1) (CelluloseMill^{®} - Mill-lab 5) equipped with high-precision blades. The pulp was milled until the fibers passed through a 60 µm mesh by the action of a suction box.

10 kg of the fibers obtained in the previous step were introduced into a mixing device (2) (Promixon hot/cold mixing system type XWOOD-MC/600/1800/W) equipped with a heating jacket containing thermal fluid heated by steam from the combustion of black liquor from a pulp production unit (B). The propellers were rotated until their tips reached a velocity of 22.0 m/s. This rotation was maintained under vacuum (gauge pressure of -900 mbar) until the fiber moisture content was reduced by 30% compared to the initial value due to heat generated by both fiber friction and the heating jacket.

8 kg of commercial polylactic acid (C) (Luminy^{®} PLA LX175), 7 kg of poly(butylene adipate-co-terephthalate) (FC Ecoplastics BG1000) (C), 1 kg of lubricant (D) (fatty acid ester), and 1 kg of plasticizer (D) (epoxidized soybean oil) were added while maintaining the tip velocity of the propellers at 22.0 m/s. The propellers tip velocity was then increased to 38 m/s under vacuum (gauge pressure of -900 mbar) until the intensity of the electric current of the motor driving the propellers reached 70A. The tip velocity was gradually reduced to 15 m/s and maintained for 120 seconds. Once the mixing of the softened/melted thermoplastic polymers with the mechanically treated fibers and additives was completed, this material, with a bulk density six times higher than the initial fiber density, was transferred into a cylindrical cooling drum (3) equipped with a water-cooling system at 25 °C (E) and kept there until the mixture temperature reached 80 °C. The resulting material was then discharged into a vibrating sieve with a 6 mm mesh (4). The rejected material (F) was ground in a knife mill equipped with a sieve of the same size (5).

To obtain the final composite, the precursor material described above was processed using a Krauss Maffei ZE42 (6) twin-screw, co-rotating, intermeshing extruder fed via conventional feeders. Along with the precursor material, a masterbatch (G) was added. Remarkably, the precursor material maintained the feeder operating at full capacity, without any decline in its feeding capacity. This enabled a successful large-scale industrial extrusion, resulting in the final composite material (H).

## Claims

1. A process for producing composites from cellulosic fibers comprising the steps of:
a) Selecting of cellulosic fibers;
b) Mechanically treating the cellulosic fibers selected in step a) in milling equipment until their average length is reduced to values between 60-800 µm, preferably between 200-500 µm;
c) Adding the cellulosic fibers resulting from step b) to a mixing device equipped with rotational means connected to a rotating shaft and with heating means, and activating the heating and/or the rotation means to achieve a tip velocity of the rotating means between 5.0-22.0 m/s and under vacuum at relative gauge pressures between -100 mbar and - 900 mbar, and maintaining these operating conditions until the temperature inside the mixing device reaches values between 40-120 °C;
d) Adding to the mixing device, at a tip velocity of the rotating means between 5.0-22.0 m/s, at least one thermoplastic polymer in a way to achieve a cellulosic fiber content between 20-60 wt% relative to the total blend mass, along with the addition of additives to achieve a proportion of 0.25-30 wt% relative to the total blend mass;
e) Increasing the tip velocity of the rotating means in the mixing device up to 50.0 m/s and maintaining this rotation under vacuum for a sufficient period of time until the temperature rises, through heating means and/or friction between components in the mixing device to above the VICAT softening point and/or the melting point of the thermoplastic polymers, ensuring adhesion and/or wetting of the thermoplastic polymers and additives onto the fibers, monitoring the process by the increase in the intensity of the electric current needed to maintain the velocity of the rotating means;
f) Stopping the heating means and/or gradually reducing the rotational speed of the mixing means until it reaches 30%-40% of the maximum speed used, with this reduction monitored either by predetermined intensity of the electric current or by predetermined temperature values;
g) Maintaining the rotation achieved in step (f) for a period of 30-120 seconds;
h) Transferring the material resulting from steps (a) to (g), with bulk densities between 0.15-2.0 g/cm³, to a cylindrical cooling drum equipped with a water-based cooling system at temperatures of 25°C or lower, and rotating elements connected to a rotating shaft that provide axial and radial movements and compression against the drum walls;
i) Maintaining the rotation of the rotating means in step (h) until the temperature of the resulting material reaches 80°C or lower;
j) Discharging the material from step (i) onto a vibrating sieve with a mesh diameter between 3-6 mm;
k) Discharging the material rejected by the sieve in step (j) into a grinder equipped with a 3-6 mm mesh for grinding;
l) Feeding the materials obtained in steps (j) and (k) into an extruder via either the main feeder or a side feeder to produce a final product containing 10-60% cellulosic fibers by mass relative to the total product mass.

2. The process according to claim 1, wherein in step a) the cellulosic fibers are selected from cellulosic pulps obtained from washers from a cellulosic pulp production unit with moisture contents between 90-98% and subsequently dried until obtaining a moisture content between 4-15% and/or selected from residual cellulosic fibers from a cellulosic production or processing unit.

3. The process according to claim 2, wherein the drying of cellulosic fibers is carried out using equipment selected from the group consisting of flash dryers, ring dryers, rotary drums dryers and drying presses used in the industrial production of cellulosic pulps.

4. The process according to any of the preceding claims, wherein in step a) the cellulosic fibers are selected from bleached eucalyptus kraft pulp.

5. The process according to any of the preceding claims, wherein the cellulosic fibers to be mechanically treated in step b) are in the form of powder, flakes, sheets or webs, granules, threads, fabrics, bales, or pulp.

6. The process according to any of the preceding claims, wherein the milling equipment in step b) is selected from the group consisting of knife mills, hammer mills, ball mills, and mills equipped with mesh screens of predefined dimensions.

7. The process according to any of the preceding claims, wherein the heating means in steps c) and e) are heating jackets.

8. The process according to claim 7, wherein the heating jacket is heated by an electrical resistance or by a thermal fluid and/or through heat exchange with secondary heat sources such as exhaust gases from biomass thermal boilers, natural gas cogeneration and black liquor recovery boilers.

9. The process according to any of the preceding claims, wherein the rotating means in the mixing device are propellers having a plurality of blades sized to induce 3 stages, namely a bottom scraper propeller to create a vortex and lift the material, one or more intermediate propellers to induce fluidity and agitation and an additional propeller to force the circulation of material from the periphery of the equipment to the center.

10. The process according to any of the preceding claims, wherein in step l) in addition to the material obtained in steps j) and k), the extruder is also fed with a masterbatch comprising at least one thermoplastic polymer and at least one additive.

11. The process according to any of the preceding claims, wherein the thermoplastic polymers are selected from the group consisting of polyclefins, polyamides, polyesters, polyurethanes, polyvinyl esters, polystyrenes, thermoplastic starches, thermoplastic elastomers, acrylics, cellulose derivatives and styrene copolymers, acrylates, acrylonitrile, ethylene and butadiene, virgin and/or recycled, and mixtures thereof.

12. The process according to any of the preceding claims, wherein the additives are selected from the group consisting of plasticizers, compatibilizers, impact modifiers, chain extenders, flame retardants, antimicrobial agents, UV stabilizers, lubricants, mineral fillers, dyes, pigments and mixtures thereof.

13. The process according to any of the preceding claims, wherein the final product obtained in step l) is in form of granules.

## Patentansprüche

1. Verfahren zur Herstellung von Verbundwerkstoffen aus cellulosischen Fasern, umfassend die folgenden Schritte:
a) Auswählen von cellulosischen Fasern;
b) mechanisches Behandeln der in Schritt a) ausgewählten cellulosischen Fasern in einer Mahlausrüstung, bis ihre mittlere Länge auf Werte zwischen 60 und 800 µm, vorzugsweise zwischen 200 und 500 µm, reduziert ist;
c) Zugeben der aus Schritt b) resultierenden cellulosischen Fasern in eine Mischeinrichtung, die mit Drehelementen, die mit einer rotierenden Welle verbunden sind, und mit Heizeinrichtungen ausgestattet ist, und Aktivieren der Heizeinrichtungen und/oder der Drehelemente, um eine Spitzengeschwindigkeit der Drehelemente zwischen 5,0 und 22,0 m/s und ein Vakuum bei relativen Überdrücken zwischen 100 mbar und 900 mbar zu erreichen, und Aufrechterhalten dieser Betriebsbedingungen, bis die Temperatur im Inneren der Mischeinrichtung Werte zwischen 40 und 120 °C erreicht;
d) Zugeben von mindestens einem thermoplastischen Polymer in die Mischeinrichtung bei einer Spitzengeschwindigkeit der Drehelemente zwischen 5,0 und 22,0 m/s, um einen Gehalt an cellulosischen Fasern zwischen 20 und 60 Gew.-% bezogen auf die Gesamtmasse der Mischung zu erreichen, zusammen mit dem Zugeben von Additiven, um einen Anteil von 0,25 bis 30 Gew.-% bezogen auf die Gesamtmasse der Mischung zu erreichen;
e) Erhöhen der Spitzengeschwindigkeit der Drehelemente in der Mischeinrichtung auf bis zu 50,0 m/s und Aufrechterhalten dieser Rotation unter Vakuum während einer ausreichenden Zeitdauer, bis sich die Temperatur durch die Heizeinrichtungen und/oder durch Reibung zwischen den Komponenten in der Mischeinrichtung über den VICAT-Erweichungspunkt und/oder den Schmelzpunkt der thermoplastischen Polymere erhöht, wodurch eine Haftung und/oder Benetzung der thermoplastischen Polymere und Additive an den Fasern gewährleistet wird, wobei der Prozess durch den Anstieg der elektrischen Stromstärke überwacht wird, die erforderlich ist, um die Geschwindigkeit der Drehelemente aufrechtzuerhalten;
f) Abschalten der Heizeinrichtungen und/oder allmähliches Verringern der Drehgeschwindigkeit der Mischelemente, bis 30 bis 40% der maximal verwendeten Geschwindigkeit erreicht sind, wobei diese Verringerung entweder durch eine vorbestimmte elektrische Stromstärke oder durch vorbestimmte Temperaturwerte überwacht wird;
g) Aufrechterhalten der in Schritt f) erreichten Drehung für eine Dauer von 30 bis 120 Sekunden;
h) Überführen des aus den Schritten a) bis g) resultierenden Materials mit Schüttdichten zwischen 0,15 und 2,0 g/cm³ in eine zylindrische Kühltrommel, die mit einem wasserbasierten Kühlsystem bei Temperaturen von 25 °C oder darunter und mit Drehelementen ausgestattet ist, die mit einer rotierenden Welle verbunden sind und axiale und radiale Bewegungen sowie eine Verdichtung gegen die Trommelwände bewirken;
i) Aufrechterhalten der Drehung der Drehelemente gemäß Schritt h), bis die Temperatur des resultierenden Materials 80 °C oder weniger erreicht;
j) Austragen des Materials aus Schritt i) auf ein Vibrationssieb mit einer Maschenweite zwischen 3 und 6 mm;
k) Austragen des vom Sieb in Schritt j) zurückgehaltenen Materials in einen Zerkleinerer, der mit einer Masche von 3 bis 6 mm zum Zerkleinern ausgestattet ist;
l) Zuführen der in den Schritten j) und k) erhaltenen Materialien in einen Extruder über entweder den Haupteinzug oder einen Seiteneinzug, um ein Endprodukt herzustellen, das 10 bis 60 Masse-% cellulosische Fasern bezogen auf die Gesamtmasse des Produkts enthält.

2. Verfahren nach Anspruch 1, wobei in Schritt a) die cellulosischen Fasern aus cellulosischen Pulpen ausgewählt werden, die aus Waschern einer cellulosischen Pulpenerzeugungseinheit mit Feuchtigkeitsgehalten zwischen 90 und 98% gewonnen und anschließend getrocknet werden, bis ein Feuchtigkeitsgehalt zwischen 4 und 15% erhalten wird, und/oder aus cellulosischen Restfasern ausgewählt werden, die aus einer cellulosischen Produktions- oder Verarbeitungseinheit stammen.

3. Verfahren nach Anspruch 2, wobei das Trocknen der cellulosischen Fasern mit einer Ausrüstung durchgeführt wird, die aus der Gruppe ausgewählt ist, bestehend aus Sprühtrocknern, Ringtrocknern, Trommeltrocknern und Pressentrocknern, wie sie in der industriellen Herstellung von cellulosischen Pulpen verwendet werden.

4. Verfahren nach einem der vorhergehenden Ansprüche, wobei in Schritt a) die cellulosischen Fasern aus gebleichter Eukalyptus-Kraft-Pulp ausgewählt werden.

5. Verfahren nach einem der vorhergehenden Ansprüche, wobei die cellulosischen Fasern, die in Schritt b) mechanisch behandelt werden sollen, in Form von Pulver, Flocken, Blättern oder Bahnen, Granulat, Fäden, Geweben, Ballen oder Pulp vorliegen.

6. Verfahren nach einem der vorhergehenden Ansprüche, wobei die Mahlausrüstung in Schritt b) aus der Gruppe ausgewählt ist, bestehend aus Messermühlen, Hammermühlen, Kugelmühlen und Mühlen, die mit Sieben mit vorgegebenen Maschenabmessungen ausgestattet sind.

7. Verfahren nach einem der vorhergehenden Ansprüche, wobei die Heizeinrichtungen in den Schritten c) und e) Heizmäntel sind.

8. Verfahren nach Anspruch 7, wobei der Heizmantel durch einen elektrischen Widerstand oder durch ein Wärmeträgerfluid und/oder durch Wärmeaustausch mit sekundären Wärmequellen, wie Abgasen aus Biomasse-Thermalkesseln, Erdgas-Kraft-Wärme-Kopplungsanlagen und Schwarzlaugenrecoverykesseln, beheizt wird.

9. Verfahren nach einem der vorhergehenden Ansprüche, wobei die Drehelemente in der Mischeinrichtung Propeller mit einer Vielzahl von Schaufeln sind, die so dimensioniert sind, dass sie drei Stufen bewirken, nämlich einen Bodenschaber-Propeller zum Erzeugen eines Wirbels und Anheben des Materials, einen oder mehrere Zwischenpropeller zum Erzeugen von Fließfähigkeit und Durchmischung und einen zusätzlichen Propeller zum Erzwingen der Zirkulation des Materials von der Peripherie der Ausrüstung zum Zentrum.

10. Verfahren nach einem der vorhergehenden Ansprüche, wobei in Schritt l) zusätzlich zu dem in den Schritten j) und k) erhaltenen Material der Extruder auch mit einem Masterbatch gespeist wird, das mindestens ein thermoplastisches Polymer und mindestens ein Additiv umfasst.

11. Verfahren nach einem der vorhergehenden Ansprüche, wobei die thermoplastischen Polymere aus der Gruppe ausgewählt sind, bestehend aus Polyolefinen, Polyamiden, Polyestern, Polyurethanen, Polyvinylestern, Polystyrolen, thermoplastischen Stärken, thermoplastischen Elastomeren, Acrylpolymeren, Cellulosederivaten und Styrol-Copolymeren, Acrylaten, Acrylnitril, Ethylen und Butadien, neu und/oder recycelt, und deren Mischungen.

12. Verfahren nach einem der vorhergehenden Ansprüche, wobei die Additive aus der Gruppe ausgewählt sind, bestehend aus Weichmachern, Haftvermittlern, Schlagzähmodifikatoren, Kettenverlängerern, Flammschutzmitteln, antimikrobiellen Mitteln, UV-Stabilisatoren, Schmiermitteln, mineralischen Füllstoffen, Farbstoffen, Pigmenten und deren Mischungen.

13. Verfahren nach einem der vorhergehenden Ansprüche, wobei das in Schritt l) erhaltene Endprodukt in Form von Granulat vorliegt.

## Revendications

1. Procédé de production de composites à partir de fibres cellulosiques, comprenant les étapes suivantes :
a) sélection de fibres cellulosiques ;
b) traitement mécanique des fibres cellulosiques sélectionnées à l'étape a) dans un équipement de broyage jusqu'à ce que leur longueur moyenne soit réduite à des valeurs comprises entre 60 et 800 µm, de préférence entre 200 et 500 µm ;
c) ajout des fibres cellulosiques résultant de l'étape b) dans un dispositif de mélange équipé de moyens de rotation reliés à un arbre rotatif et de moyens de chauffage, et activation des moyens de chauffage et/ou des moyens de rotation de façon à atteindre une vitesse périphérique des moyens de rotation comprise entre 5,0 et 22,0 m/s et sous vide à des pressions relatives manométriques comprises entre 100 mbar et 900 mbar, et maintien de ces conditions de fonctionnement jusqu'à ce que la température à l'intérieur du dispositif de mélange atteigne des valeurs comprises entre 40 et 120 °C ;
d) ajout, dans le dispositif de mélange, à une vitesse périphérique des moyens de rotation comprise entre 5,0 et 22,0 m/s, d'au moins un polymère thermoplastique de façon à obtenir une teneur en fibres cellulosiques comprise entre 20 et 60% en poids par rapport à la masse totale du mélange, conjointement avec l'ajout d'additifs de façon à obtenir une proportion de 0,25 à 30% en poids par rapport à la masse totale du mélange ;
e) augmentation de la vitesse périphérique des moyens de rotation dans le dispositif de mélange jusqu'à 50,0 m/s et maintien de cette rotation sous vide pendant une durée suffisante jusqu'à ce que la température s'élève, par les moyens de chauffage et/ou par le frottement entre les composants dans le dispositif de mélange, au-dessus du point de ramollissement VICAT et/ou du point de fusion des polymères thermoplastiques, assurant l'adhésion et/ou le mouillage des polymères thermoplastiques et des additifs sur les fibres, le procédé étant surveillé par l'augmentation de l'intensité du courant électrique nécessaire pour maintenir la vitesse des moyens de rotation ;
f) arrêt des moyens de chauffage et/ou réduction progressive de la vitesse de rotation des moyens de mélange jusqu'à atteindre 30 à 40% de la vitesse maximale utilisée, cette réduction étant surveillée soit par une intensité prédéterminée du courant électrique soit par des valeurs prédéterminées de température ;
g) maintien de la rotation obtenue à l'étape f) pendant une durée de 30 à 120 secondes ;
h) transfert du matériau résultant des étapes a) à g), présentant des densités apparentes comprises entre 0,15 et 2,0 g/cm³, dans un tambour de refroidissement cylindrique équipé d'un système de refroidissement à base d'eau à des températures de 25 °C ou inférieures, et d'éléments rotatifs reliés à un arbre rotatif qui assurent des mouvements axiaux et radiaux ainsi qu'une compression contre les parois du tambour ;
i) maintien de la rotation des moyens rotatifs de l'étape h) jusqu'à ce que la température du matériau résultant atteigne 80 °C ou une valeur inférieure ;
j) décharge du matériau provenant de l'étape i) sur un tamis vibrant présentant un diamètre de maille compris entre 3 et 6 mm ;
k) décharge du matériau retenu par le tamis de l'étape j) dans un broyeur équipé d'une maille de 3 à 6 mm pour le broyage ;
l) alimentation des matériaux obtenus aux étapes j) et k) dans une extrudeuse au moyen soit de l'alimentateur principal soit d'un alimentateur latéral afin de produire un produit final contenant de 10 à 60% en masse de fibres cellulosiques par rapport à la masse totale du produit.

2. Procédé selon la revendication 1, dans lequel, à l'étape a), les fibres cellulosiques sont sélectionnées à partir de pâtes cellulosiques obtenues à partir de laveurs d'une unité de production de pâte cellulosique, ayant des teneurs en humidité comprises entre 90 et 98%, et séchées ensuite jusqu'à obtenir une teneur en humidité comprise entre 4 et 15%, et/ou sont sélectionnées à partir de fibres cellulosiques résiduelles provenant d'une unité de production ou de transformation cellulosique.

3. Procédé selon la revendication 2, dans lequel le séchage des fibres cellulosiques est réalisé au moyen d'un équipement sélectionné dans le groupe constitué de sécheurs flash, sécheurs annulaires, sécheurs à tambour rotatif et presses de séchage utilisées dans la production industrielle de pâtes cellulosiques.

4. Procédé selon l'une quelconque des revendications précédentes, dans lequel, à l'étape a), les fibres cellulosiques sont sélectionnées à partir de pâte kraft d'eucalyptus blanchie.

5. Procédé selon l'une quelconque des revendications précédentes, dans lequel les fibres cellulosiques à traiter mécaniquement à l'étape b) se présentent sous forme de poudre, flocons, feuilles ou bandes, granulés, fils, tissus, balles ou pâte.

6. Procédé selon l'une quelconque des revendications précédentes, dans lequel l'équipement de broyage de l'étape b) est sélectionné dans le groupe constitué de broyeurs à couteaux, broyeurs à marteaux, broyeurs à boulets et broyeurs équipés de grilles à mailles de dimensions prédéfinies.

7. Procédé selon l'une quelconque des revendications précédentes, dans lequel les moyens de chauffage des étapes c) et e) sont des manteaux chauffants.

8. Procédé selon la revendication 7, dans lequel le manteau chauffant est chauffé par une résistance électrique ou par un fluide thermique et/ou par échange de chaleur avec des sources de chaleur secondaires telles que des gaz d'échappement de chaudières thermiques à biomasse, d'unités de cogénération au gaz naturel et de chaudières de récupération de liqueur noire.

9. Procédé selon l'une quelconque des revendications précédentes, dans lequel les moyens de rotation dans le dispositif de mélange sont des hélices comportant une pluralité de pales dimensionnées pour induire trois étapes, à savoir une hélice gratte-fond destinée à créer un vortex et à soulever le matériau, une ou plusieurs hélices intermédiaires destinées à induire la fluidité et l'agitation et une hélice supplémentaire destinée à forcer la circulation du matériau de la périphérie de l'équipement vers le centre.

10. Procédé selon l'une quelconque des revendications précédentes, dans lequel, à l'étape l), en plus du matériau obtenu aux étapes j) et k), l'extrudeuse est également alimentée avec un mélange maître comprenant au moins un polymère thermoplastique et au moins un additif.

11. Procédé selon l'une quelconque des revendications précédentes, dans lequel les polymères thermoplastiques sont sélectionnés dans le groupe constitué de polyoléfines, polyamides, polyesters, polyuréthanes, polyesters vinyliques, polystyrènes, amidons thermoplastiques, élastomères thermoplastiques, acryliques, dérivés de la cellulose et copolymères de styrène, acrylates, acrylonitrile, éthylène et butadiène, vierges et/ou recyclés, et leurs mélanges.

12. Procédé selon l'une quelconque des revendications précédentes, dans lequel les additifs sont sélectionnés dans le groupe constitué de plastifiants, compatibilisants, modificateurs d'impact, allongeurs de chaîne, retardateurs de flamme, agents antimicrobiens, stabilisants UV, lubrifiants, charges minérales, colorants, pigments et leurs mélanges.

13. Procédé selon l'une quelconque des revendications précédentes, dans lequel le produit final obtenu à l'étape l) se présente sous forme de granulés.
